# DEMANDE DE BREVET EUROPEEN

(11) **EP 1 060 928 A1**
(43) Date de publication de la demande: **20.12.2000**
(21) Numéro de dépôt: 00401611.9
(22) Date de dépôt: 08.06.2000
(51) Int. Cl.: B60J 10/00

(54) **Profilé en élastomère ou plastomère, à armature semi-rigide, ajourée ou à fil**

(30) Priorité: 14.06.1999 FR 9907482
(71) Demandeur: BTR SEALING SYSTEMS FRANCE, 92000 Nanterre (FR)
(72) Inventeur: Martin, Ange, 95130 Franconville (FR)
(74) Mandataire: Jolly, Jean-Pierre

(57) **Abrégé**

Dans ce profilé, la portion susceptible de présenter des irrégularités de surface visibles de l'extérieur et dues à l'armature (6) comporte un revêtement externe (8) en un second élastomère ou plastomère compact, identique ou non à celui constituant le profilé, avec interposition entre les deux élastomères ou plastomère compacts d'une couche (9) d'un matériau cellulaire compatible avec les élastomères et/ou plastomères compacts.

## Description

La présente invention concerne un profilé en élastomère ou plastomère comprenant une armature semi-rigide, à fil métallique ou découpée dans un feuillard métallique ou en une matière synthétique et conformée ensuite au profil désiré. Elle concerne, en particulier, des profilés à section en U, qui sont destinés à équiper des encadrements de porte, de vitre ou de coffre, d'un véhicule automobile, dont ils coiffent et pincent un bord saillant, et qui comportent dans ce but une armature semi-rigide, sur laquelle est extrudée au moins une matière thermoplastique ou élastomérique.

Certaines armatures équipant ces profilés sont dites "ajourées", car elles comportent des parties, souvent en forme de lamelles, séparées les unes des autres par des espaces vides, permettant à l'armature et au profilé de se déformer pour épouser plus aisément la forme de l'encadrement auquel ce profilé est associé.

Les parties évidées de l'armature entraînent, cependant, aux emplacements correspondants, des irrégularités de la surface externe du profilé, avec pour conséquence un aspect peu agréable au regard. C'est ainsi, par exemple, que, lorsque l'armature comporte des lamelles sensiblement parallèles, régulièrement espacées, la surface externe du profilé présente une alternance de parties creuses et saillantes, que l'on désigne dans la technique par le terme évocateur d'aspect "en côtes de cheval".

D'autres armatures présentant le même type de problèmes sont celles dites à "fil", qui comprennent au moins un fil métallique continu, recourbé de manière à présenter un profil ondulé régulier, les parties contiguës du fil disposées entre les sommets des ondulations étant réunies transversalement par des tresses de fibres textiles ou en une matière synthétique entrelacées avec le fil métallique, de manière à enserrer celui-ci, ces armatures pouvant elles aussi être conformées en U, tout en étant aptes à se déformer pour épouser la forme de l'encadrement auquel le profilé est associé

En vue de remédier à ces inconvénients, diverses solutions ont été envisagées, mais aucune d'entre elles n'est pleinement satisfaisante.

Une proposition récente de la technique antérieure consiste à doubler la partie du profilé visible de l'extérieur et équipée de l'armature ajourée par une cloison en le même matériau ou en un matériau différent, qui est séparée par un intervalle de la partie contiguë du profilé et qui est attenante à celui-ci de manière à délimiter avec lui un volume clos, l'ensemble formant ainsi un matelas déformable. Cette cloison peut être coextrudée avec le profilé ou rapportée sur celui-ci.

Cette cloison dissimule au regard les irrégularités de la surface externe du profilé dues à l'armature. En outre, le matelas formé par cette cloison et la partie attenante du profilé se révèle satisfaisant sur le plan de l'insonorisation de l'habitacle du véhicule.

En revanche, il est clair que ce matelas réduit considérablement l'aptitude à la déformation du profilé, ce qui complique notablement la mise en place d'un profilé de ce type à section en U sur un bord saillant d'un encadrement d'ouvrant d'un véhicule automobile, lorsque cet encadrement présente des parties à courbure très accentuée ou à rayon réduit.

On connaît aussi, par GB-A-1 044 475, un profilé à section transversale en U pour encadrement de porte ou de coffre d'un véhicule automobile. Ce profilé comprend une couche en un matériau thermoplastique, dans lequel est noyée une armature métallique, et une couverture en tissu ou en un matériau tricoté. Entre la couche en matériau thermoplastique et la couverture peut être interposée une couche de caoutchouc ou de matière plastique cellulaire, destinée non à dissimuler des défauts de surface éventuellement dus à l'armature, dont la nature n'est pas précisée, mais à cacher des rides susceptibles de se former sur le profilé dans les parties à forte courbure de l'encadrement de porte ou de coffre. La couverture en tissu ou tricotée est rapportée sur les autres couches du profilé et elle a un simple rôle décoratif.

La présente invention vise à remédier aux inconvénients de la technique antérieure en proposant un profilé à armature ajourée ou à armature à fil, dans lequel les irrégularités de surface dues à la présence de l'armature sont dissimulées au regard, sans avoir recours à un matelas externe et sans nuire à l'aptitude à la déformation du profilé.

L'invention vise également à proposer un profilé de ce type qui présente un bon effet insonorisant, lorsqu'il équipe un encadrement d'ouvrant de la carrosserie d'un véhicule automobile.

A cet effet, l'invention a pour objet un profilé en un élastomère ou plastomère compact à armature ajourée ou à armature à fil, notamment à section transversale en U, caractérisé en ce que la portion de ce profilé susceptible de présenter des irrégularités de surface visibles de l'extérieur et dues à l'armature comporte un revêtement externe en un second élastomère ou plastomère compact, identique ou non à celui constituant le profilé, avec interposition entre les deux élastomères ou plastomères compacts d'une couche d'un matériau cellulaire compatible avec les élastomères et/ou plastomères compacts.

La couche de matériau cellulaire interposée entre le corps du profilé et le revêtement en le second élastomère ou plastomère compact permet de supprimer ou de compenser en grande partie les irrégularités de surface dues à l'armature, tandis que le second élastomère ou plastomère cache ce matériau cellulaire, participe lui aussi à la dissimulation des irrégularités dues à l'armature et peut être choisi d'une qualité et/ou d'une couleur telle qu'il présente un excellent aspect de surface, agréable au regard.

On notera que l'élastomère ou plastomère constituant le corps du profilé peut être d'une qualité ordinaire, tandis que celui constituant le revêtement externe visible de l'extérieur peut être en une meilleure qualité.

La couche intermédiaire en un matériau cellulaire, qui peut être constituée d'un élastomère ou d'un plastomère cellulaire, par exemple de caoutchouc cellulaire, présente en outre l'avantage de posséder, de façon connue, un effet insonorisant.

Un tel profilé peut être réalisé de façon simple par coextrusion sur l'armature de l'élastomère ou plastomère compact constituant le corps du profilé et du matériau cellulaire, le second élastomère ou plastomère compact étant ensuite extrudé dans la position souhaitée sur le premier élastomère ou plastomère et sur le matériau cellulaire.

D'autres caractéristiques et avantages de l'invention apparaîtront dans la description détaillée qui va suivre, dans laquelle on se référera aux dessins annexés. Sur ces dessins :
La figure 1 est une coupe transversale d'un profilé de la technique antérieure à section en U, comportant un matelas destiné à dissimuler les irrégularités de surfaces dues à l'armature qu'il comporte ;
La figure 2 est une coupe transversale d'un profilé à section en U conforme à l'invention.

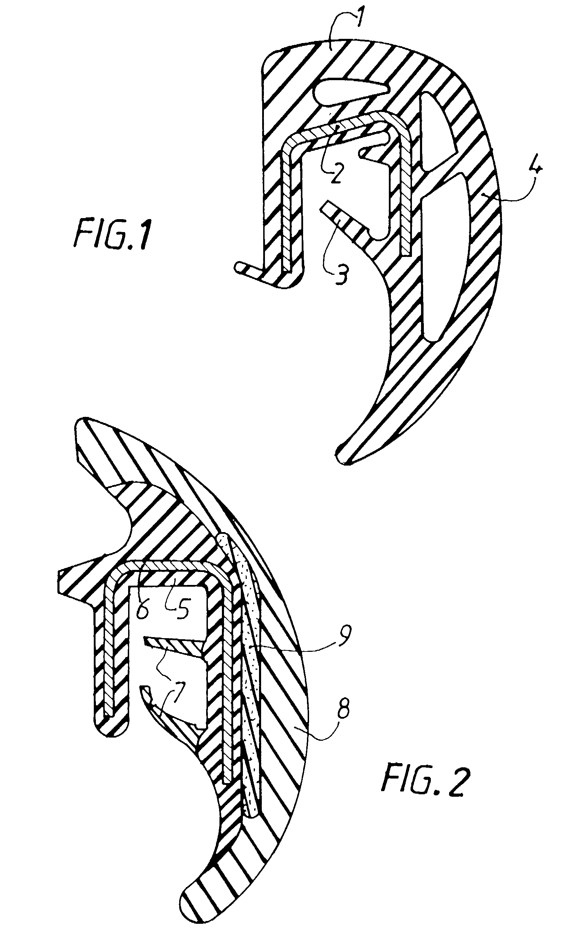

Le profilé de la figure 1 est un profilé d'un type connu à section en U, destiné à coiffer en la pinçant une feuillure d'un encadrement d'ouvrant d'une carrosserie d'un véhicule automobile.

Ce profilé est en un élastomère compact 1, dans lequel est noyée une armature rigide ajourée 2, à section en U, dont notamment les branches latérales comportent des lamelles régulièrement espacées.

A partir d'au moins une branche du profilé, des lèvres 3 font saillie en direction de l'autre branche, en vue d'éviter toute désolidarisation accidentelle de ce profilé et de la feuillure qu'il équipe.

Les lamelles des branches latérales de l'armature risquent de produire, à la surface externe du profilé, des irrégularités résultant de l'alternance de parties en creux et en reliefs, avec pour conséquence un aspect peu agréable, dit en côtes de cheval.

Pour dissimuler au regard ces irrégularités, la branche du profilé visible de l'extérieur est doublée extérieurement par une cloison 4 séparée de cette branche par un intervalle et attenante à celle-ci de façon à définir avec elle un volume clos, de manière à former un matelas, qui dissimule au regard les irrégularités de surface et a une fonction insonorisante. Il en est de même pour la base du U ou l'armature peut être également ajourée.

Ce matelas présente en revanche l'inconvénient de réduire sensiblement l'aptitude à la déformation du profilé, de sorte qu'il est malaisé de faire épouser à celui-ci la forme d'un encadrement d'ouvrant présentant des angles à faible rayon de courbure.

Le profilé conforme à l'invention représenté sur la figure 2 ne présente pas cet inconvénient.

Il a lui aussi une section transversale en U et il est constitué d'un élastomère ou plastomère compact 5, dans lequel est noyée une armature rigide ajourée 6 à section en U, dont les branches latérales comprennent des lamelles espacées.

Des lèvres 7, ici en un matériau différent de celui du profilé, font saillie à partir de l'une des branches de celui-ci en direction de l'autre branche.

Conformément à l'invention, pour dissimuler au regard les déformations produites superficiellement sur les branches du profilé par les lamelles de l'armature, celle de ces branches visible de l'extérieur est gainée d'un élastomère ou plastomère compact 8, ici différent de celui du profilé, présentant un meilleur aspect de surface et éventuellement coloré, tandis qu'une couche 9 de caoutchouc ou plastomère cellulaire est interposée entre les deux matériaux 6 et 8.

La couche de matériau cellulaire 9 supprime ou atténue considérablement les défauts de surface de la branche correspondante du profilé, tout en absorbant de façon appréciable les ondes sonores, tandis que le revêtement compact 8 contribue, lui aussi, à dissimuler les défauts de surface de la branche du profilé, tout en présentant un aspect superficiel agréable au regard.

Ce profilé peut épouser facilement la forme d'encadrements d'ouvrants comportant des parties à courbure accentuée et il est d'une fabrication plus aisée que celui de la figure 1.

Il sera clair pour l'homme du métier qu'au lieu d'une armature ajourée, le profilé conforme à l'invention peut comporter avec les mêmes avantages une armature du type dit à fil.

## Revendications

1. Profilé en un élastomère ou plastomère compact à armature ajourée ou à armature à fil, notamment à section transversale en U, caractérisé en ce que la portion de ce profilé susceptible de présenter des irrégularités de surface visibles de l'extérieur et dues à l'armature (6) comporte un revêtement externe (8) en un second élastomère ou plastomère compact, identique ou non à celui constituant le profilé, avec interposition entre les deux élastomères ou plastomère compacts d'une couche (9) d'un matériau cellulaire compatible avec les élastomères et/ou plastomères compacts.

2. Profilé selon la revendication 1, caractérisé en ce que la couche (9) de matériau cellulaire est constituée d'un élastomère ou d'un plastomère cellulaire

3. Profilé selon l'une des revendications 1 et 2, caractérisé en ce que le revêtement externe (8) est en un élastomère ou plastomère compact de qualité différente de celui (6) constituant le profilé.

4. Profilé selon l'un des revendications 1 à 3, caractérisé en ce que le revêtement externe (8) est coloré.
